(19) Europäisches Patentamt
European Patent Office
Office européen des brevets

(11) Veröffentlichungsnummer: **0 176 058**
**A2**

(12) # EUROPÄISCHE PATENTANMELDUNG

(21) Anmeldenummer: **85111967.7**

(22) Anmeldetag: **21.09.85**

(51) Int. Cl.⁴: **C 08 L 71/04**
C 08 L 25/04, C 08 L 25/10
C 08 L 53/02, C 08 L 51/06
C 08 K 5/51, C 08 K 7/14

(30) Priorität: **24.09.84 DE 3434976**

(43) Veröffentlichungstag der Anmeldung:
**02.04.86 Patentblatt 86/14**

(84) Benannte Vertragsstaaten:
**BE DE FR GB IT NL**

(71) Anmelder: **BASF Aktiengesellschaft**
**Carl-Bosch-Strasse 38**
**D-6700 Ludwigshafen(DE)**

(72) Erfinder: **Hambrecht, Juergen, Dr.**
**Werderstrasse 30**
**D-6900 Heidelberg(DE)**

(72) Erfinder: **Mueller, Wolfgang, Dr.**
**Hahnenweg 20**
**D-6730 Neustadt(DE)**

(72) Erfinder: **Gerberding, Karl, Dr.**
**In der Dreispitz 9**
**D-6706 Wachenheim(DE)**

(72) Erfinder: **Echte, Adolf, Dr.**
**Leuschnerstrasse 42**
**D-6700 Ludwigshafen(DE)**

(72) Erfinder: **Swoboda, Johann, Dr.**
**Neuwiesenstrasse 28**
**D-6700 Ludwigshafen(DE)**

(72) Erfinder: **Brandstetter, Franz, Dr.**
**Rittelbueschel 45**
**D-6730 Neustadt(DE)**

(72) Erfinder: **Boehlke, Klaus, Dr.**
**Gerhart-Hauptmann-Strasse 53**
**D-6717 Hessheim(DE)**

(72) Erfinder: **Gausepohl, Hermann, Dr.**
**Neuweg 10**
**D-6704 Mutterstadt(DE)**

(54) **Thermoplastische Formmassen.**

(57) Thermoplastische Formmassen auf der Grundlage von Polyphenylenethern oder Gemischen aus Polyphenylenethern und Styrolpolymerisaten, die außerdem ein hydriertes lineares Blockpolymerisat einer bestimmten allgemeinen Formel enthalten.

EP 0 176 058 A2

Croydon Printing Company Ltd.

Thermoplastische Formmassen

Die Erfindung betrifft neue thermoplastische Formmassen, die Polyphenylenether oder Gemische aus Polyphenylenethern und Styrolpolymerisaten und zur Verbesserung der Schlagzähigkeit und des Verarbeitungsverhaltens statistisch aufgebaute, hydrierte lineare Blockpolymerisate enthalten.

Polyphenylenether sind dem Fachmann als eine Klasse von Thermoplasten bekannt, die eine Reihe von hervorragenden physikalischen Eigenschaften besitzen. Sie können durch oxidative und nicht-oxidative Verfahren hergestellt werden, wie dies beispielsweise in den US-PS 3 306 874, 3 306 875, 3 257 357 und 3 257 358 beschrieben worden ist. Es ist weiterhin bekannt, daß viele der Eigenschaften der Polyphenylenether, beispielsweise die Leichtigkeit der Verarbeitung, die Schlagfestigkeit und die Lösungsmittelbeständigkeit, verbessert werden können, indem man diese Harze mit anderen Harzen, wie z.B. mit Polystyrol, kombiniert. So sind z.B. thermoplastische Massen, die sich zur Herstellung von Formteilen eignen und die schlagzäh modifizierte Styrolpolymerisate und Polyphenylenether enthalten aus den US-PS 3 383 435, 4 128 602 sowie 4 128 603 bekannt. Solche Formmassen eignen sich zur Herstellung von Formteilen, die sich im Vergleich zu schlagzäh modifizierten Styrolpolymerisaten, die nicht mit Polyphenylenethern abgemischt sind, durch eine bessere Wärmeformbeständigkeit auszeichnen. Die Materialeigenschaften derartiger Formmassen sind im allgemeinen zufriedenstellend. Wünschenswert sind jedoch für spezielle Anwendungen eine verbesserte Schlagzähigkeit und beim Einsatz im Großspritzguß eine verbesserte Verarbeitbarkeit, insbesondere eine höhere Fließfähigkeit.

Zur Verbesserung der Schlagzähigkeit ist verschiedentlich vorgeschlagen worden, elastomere Blockmischpolymerisate zuzusetzen. Zum Stand der Technik nennen wir: (1) DE-AS 1 932 234, (2) DE-AS 2 000 118, (3) DE-OS 2 255 930, (4) DE-OS 2 750 515, (5) DE-OS 2 434 848, (6) DE-OS 3 038 551, (7) EP 80 666, (8) WO 83/01 254.

In (1) - (3) wird die Zugabe von unterschiedlich aufgebauten, vornehmlich aus vinylaromatischen und konjugierten Dienblöcken bestehenden Blockcopolymerisaten beschrieben. Diese Mischungen zeichnen sich durch eine verbesserte Schlagzähigkeit aus. Aufgrund der bei hohen Verarbeitungstemperaturen auftretenden Vernetzung dieser Blockcopolymerisate ist die Wirkung der zugesetzten Blockcopolymerisate nicht befriedigend. In der Folge ist deshalb in (4) - (8) vorgeschlagen worden, hydrierte Blockcopolymerisate oder deren Mischung mit der nicht hydrierten Vorstufe als Schlagzähmodifizierungsmittel einzusetzen. Im wesentlichen werden dabei
vG/P

hydrierte Block- oder Teleblockcopolymerisate, bestehend aus einem vinylaromatischen Kohlenwasserstoffblock und einem hydrierten Blockteil, das durch Polymerisation eines konjugierten Diens, wie z.B. Butadien oder Isopren erhalten wurde, eingesetzt. Die Schlagzähigkeit dieser Polymermischungen ist weiter verbessert. Gleichzeitig wird jedoch durch Zugabe der Blockcopolymerisate die Wärmeformbeständigkeit abgesenkt. Nicht befriedigend bleibt das Verarbeitungsverhalten der Mischungen insbesondere im Großspritzguß.

Aufgabe der vorliegenden Erfindung war es deshalb, thermoplastische Formmassen auf der Grundlage von Polyphenylenether oder Mischungen aus Polyphenylenethern und Styrolpolymerisaten zu schaffen, die zu Formteilen mit einer verbesserten Schlagzähigkeit bei gleichzeitig wenig veränderter hoher Wärmeformbeständigkeit verarbeitet werden können und deren Verarbeitungsverhalten wesentlich verbessert ist.

Diese Aufgabe wird erfindungsgemäß durch thermoplastische Formmassen auf der Grundlage von Polyphenylenether oder Gemischen aus Polyphenylenethern und Styrolpolymerisaten gelöst, die außerdem ein hydriertes, lineares Blockcopolymerisat der allgemeinen Formel $(AB)_n$ enthalten, worin die Blöcke A aufgebaut sind aus mindestens einem mono-alkenyl-aromatischen Kohlenwasserstoff und die Blöcke B statistisch aufgebaute hydrierte Copolymerisate darstellen, aus 5 bis 30 Gew.-Teilen mindestens eines mono-alkenyl-aromatischen Kohlenwasserstoffs, 95 bis 70 Gew.-Teilen mindestens eines copolymerisierbaren konjugierten Diens, und auf den Block B aufgepfropft 0 bis 40 Gew.-Teilen mindestens eines ethylenisch ungesättigten Monomeren, ausgewählt aus der Gruppe, der (Meth)acrylsäurealkylester mit 1 bis 8 C-Atomen im Alkylrest, Styrol und Arcylnitril, wobei die Gewichtsteile sich zu 100 Gewichtsteile ergänzen und wobei n = 1 oder eine ganze Zahl von 2 bis 5 ist und die Blöcke A und B im Verhältnis 1 : 9 bis 8 : 2 stehen.

Die hydrierten Blockcopolymerisate sind linear aufgebaut und enthalten im A-Block bevorzugt Styrol, $\alpha$-Methylstyrol, o- und/oder p-Methylstyrol und/oder p-tert.-Butylstyrol und einen statistisch aufgebauten, hydrierten B-Block aus 5 bis 30 Gewichtsteilen Styrol, $\alpha$-Methylstyrol, o- und/oder p-Methylstyrol und/oder p-tert.-Butylstyrol, 95 bis 70 Gewichtsteilen Butadien, Isopren und/oder Pentadien und aufgepfropft auf den Block B 0 bis 20 Gewichtsteilen (Meth)acrylsäurealkylester mit 1 bis 4 C-Atomen im Alkylrest, Styrol und/oder Acrylnitril, wobei mindestens 95 % aller ursprünglich vorhandenen monoolefinisch ungesättigten Doppelbindungen hydriert und keine der von den vinylaromatischen Monomeren herrührende Doppelbindungen hydriert sind.

Besonders bevorzugt sind linear aufgebaute hydrierte $(AB)_n$-Blockcopolymerisate mit einem A-Blockanteil von 10 bis 80 Gewichtsteilen, aufgebaut aus Styrol, α-Methylstyrol und/oder p-Methylstyrol und einem hydrierten, statistisch aufgebauten B-Block bestehend aus 10 bis 30 Gewichtsteilen Styrol, α-Methylstyrol und/oder p-Methylstyrol und 90 bis 70 Gewichtsteilen Butadien und/oder Isopren, wobei n = 1 bis 5, vorzugsweise 1 bis 4 ist.

Darüber hinaus kann die bevorzugte Formmasse auch noch Hilfs- und Zusatzstoffe wie feuerhemmende Mittel aus der Gruppe der aromatischen Phosphate und Phosphinoxide, Verstärkungsmittel wie Glasfasern, organische und mineralische Füllstoffe sowie Stabilisatoren, Verarbeitungshilfsmittel, Farbstoffe und die sonst bisher für die Formmassen bekannt gewordenen Zusatzstoffe sowie weitere mit dem Matrixpolymerengemisch mischbare Polymere wie SMSA-Copolymerisate, SAN-Copolymerisate, Styrol-(Meth)acrylsäure--Copolymerisate, Styrol-(Meth)acrylsäurealkylester-Copolymerisate mit $C_1$- bis $C_4$-Alkylresten, Polyetherimide, Polyacrylate, Polyamide und alle anderen bisher mit Polyphenylenether als mischbar bekannt gewordenen Polymerisate enthalten.

Unter Formmassen sollen ungeformte Mischungen verstanden werden, die sich durch thermoplasitsche Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt oder in Form von Platten und Bahnen vorliegen.

Die thermoplastischen Formmassen können entweder Polyphenylenether oder Gemische aus Polyphenylenether und glasklaren oder schlagfest modifizierte Styrolpolymersaten in beliebigen Mengen enthalten, beispielsweise in Mengen von 5 bis 75 Gew.-% Styrolpolymerisat und 95 bis 25 Gew.-% Polyphenylenether. Für die Herstellung von Formteilen eignen sich insbesondere solche Formmassen, die 10 bis 70 Gew.% schlagfest modifizierte Styrolpolymerisate und 90 bis 30 Gew.-% Polyphenylenether enthalten. Zusätzlich enthalten die erfindungsgemäßen Formmassen 5 bis 40, vorzugsweise 10 bis 30 Gewichtsteile bezogen auf 100 Gewichtsteile der Mischung des hydrierten Blockcopolymerisates der allgemeinen Formel.

Bei den Polyphenylenethern handelt es sich um Verbindungen auf der Basis von in ortho-Position disubstituierten Polyphenylenoxiden, wobei der Ethersauerstoff der einen Einheit an den Benzolkern der benachbarten Einheit gebunden ist. Dabei sollen mindestens 50 Einheiten miteinander verknüpft sein. Die Polyphenylenether können in ortho-Stellung zum Sauerstoff Wasserstoff, Halogen, Kohlenwasserstoffe, die kein α-ständiges tert. Wasserstoffatom besitzen, Halogenkohlenwasserstoffe, Phenylreste und Kohlenwasserstoff-oxid-Reste tragen. So kommen in Frage: Poly(2,6-dichlor-1,4-phenylen)ether, Poly(2,6-diphenyl-1,4-phenylen)ether, Poly(2,6-di-methoxy-1,4-phenylen)ether, Poly(2,6-dimethyl-1,4-phenylen)ether, Poly(2,6-dibrom-1,4-phenylen)ether. Bevorzugterweise wird der Poly(2,6-dimethyl-1,4-phenylen)ether eingesetzt. Ganz besonders bevorzugt werden Poly(2,6-dimethyl-1,4-phenylen)ether mit einer Grenzviskosität zwischen 0,40 und 0,66 dl/g (gemessen in Chloroform bei 30°C).

Die aromatischen Polyphenylenether können durch Selbstkondensation der entsprechend einwertigen Phenole durch Einwirken von Sauerstoff in Gegenwart eines Katalysatorsystems, wie es beispielsweise in den US-PS 3 219 625, 3 306 875, 3 956 442, 3 965 069, 3 972 851 beschrieben ist, hergestellt werden.

Als Styrolpolymerisate, die in der erfindungsgemäßen Formmasse gegebenenfalls enthalten sind, werden sowohl Styrolhomopolymerisate als auch schlagzäh modifizierte Styrolpolymerisate eingesetzt.

Als monovinylaromatische Verbindungen kommen dabei insbesondere Styrol in Betracht, ferner die kern- oder seitenkettenalkylierten Styrole. Vorzugsweise wird jedoch Styrol allein verwendet.

Die Homopolymerisate werden dabei nach den bekannten Verfahren, in Masse Lösung oder Suspension hergestellt (vgl. Ullmann's Encyklopädie der technischen Chemie, Bd. 19, S. 265, Verlag Chemie, Weinheim 1980). Die Homopolymerisate können mittlere Molkulargewichte (M  ) von 1000 - 250 000 aufweisen.

Die meist angewandten Verfahren zur Herstellung schlagzäh modifizierter Styrolpolymerisate sind die Polymerisation in Masse oder Lösung, wie es beispielsweise in der US-PS 2 694 692 beschrieben ist und Verfahren zur Masse-Suspensionspolymerisation, wie sie beispielsweise in der US-PS 2 862 906 beschreiben sind. Selbstverständlich sind auch andere Verfahren anwendbar, sofern die gewünschte Teilchengröße der Kautschukphase eingestellt wird.

Als Kautschuke werden die üblicherweise für die Schlagfestmodifizierung von Styrolpolymerisaten gebräuchlichen natürlichen oder synthetischen Kautschuke eingesetzt. Geeignete Kautschuke im Sinne der Erfindung sind neben Naturkautschuk, z.B. Polybutadien, Polyisopren und Mischpolymerisate des Butadiens und/oder Isoprens mit Styrol und anderen Comonomeren,

die eine Glastemperatur unter -20°C besitzen. Besonders eignen sich Butadien-Polymerisate mit einem 1,4-cis-Gehalt, der zwischen 25 und 99 liegt. Es können aber auch Acrylatkautschuke, EPDM-, Polybutylen- und Polyoctenamerkautschuke eingesetzt werden.

Die schlagzäh modifizierten Styrolpolymerisate besitzen einen Weichkomponentenanteil von 20 - 60 Gew.-%, vorzugsweise von 22 - 45 Gew.%. Die Teilchengröße der Weichkomponente sollte im Bereich von 0,2 bis 6 µm liegen. Besonders geeignet sind schlagzäh modifizierte Polymerisate, in denen die mittlere Teilchengröße im Bereich von 0,6 bis 4 µm liegt und in denen 99 bis 85 Gew.-% der Teilchen einen Teilchendurchmesser von 0,3 bis 0,9 µm und 1 bis 20 Gew.-% der Teilchen einen Durchmesser von 3 bis 7 µm haben.

Die mittlere Teilchengröße (Gewichtsmittel) der dispersen Weichkomponenten-Phase wurde bestimmt durch Auszählen und Mitteln der zur gleichen Größenklasse (konst. Interwallbreite) gehörigen Teilchen aus elektronenmikroskopischen Dünnschichtaufnahmen. Mit den Volumina der Teilchen (3. Potenz des scheinbaren Durchmessers) innerhalb der Intervalle wird die Verteilungssummenkurve bestimmt. Beim 50 %-Ordinatenwert kann auf der Abszisse der Äquivalentdurchmesser dann abgegriffen werden. Die angegebenen mittleren Durchmesser stellen dabei einen Mittelwert von mindestens 5000 Teilchen dar.

Die Herstellung der in den Formmassen enthaltenen schlagzäh modifizierten Styrolpolymerisate kann wie oben gezeigt nach beliebigen Verfahren erfolgen, sofern dafür gesorgt ist, daß die oben genannten Teilchengrößenverteilungen eintreten. Man kann aber auch schlagzäh modifizierte Styrolpolymerisate, deren Weichkomponenten unterschiedliche Teilchengrößen haben, miteinander mischen. Die in den erfindungsgemäßen Formmassen enthaltenen Styrolpolymerisate können beispielsweise durch Mischen von Polymerisaten mit einer bestimmten Teilchengröße mit solchen Polymerisaten mit anderen Teilchengrößen erhalten werden. So kann man beispielsweise 90 Gew.-Tln eines Polymerisates mit einer mittleren Teilchengröße von 0,4 µm und 10 Gew.-Tln eines Polymerisates mit einer mittleren Teilchengröße von 6 µm verwenden.

Erfindungswesentlich sind die linear, hydrierten Blockpolymerisate, der oben angegebenen allgemeinen Formel.

Zum Aufbau der Blockpolymerisate $(AB)_n$ kommen als monovinylaromatische Kohlenwasserstoffe in Betracht: Styrol sowie seitenketten-alkylierte und kernalkylierte Styrole wie o- und p-Methylstyrol, Ethylvinylbenzol, tert.--Butylstyrol und α-Methylstyrol. Die monovinylaromatischen Verbindungen

können allein oder in Mischung miteinander eingesetzt werden, vorzugsweise werden aber Styrol, α-Methylstyrol und p-Methylstyrol allein verwendet. Der Gewichtsanteil der monovinylaromatischen Verbindung an in den B-Blöcken beträgt 5 bis 30, vorzugsweise 10 bis 30 und ganz besonders bevorzugt 10 bis 25 Gewichtsteile.

Konjugierte Diene, die für die erfindungsgemäße hydrierten Blockcopolymerisat-Blöcke B insbesondere in Betracht kommen, sind beispielsweise Butadien-1,3 sowie Isopren und Pentadien. Diese Diene werden entweder allein oder in Mischung miteinander für die Herstellung der statistischen Copolymerisate herangezogen. Der Dien-Gehalt in den (Co)-Polymerketten der Blöcke B kann 95 bis 70 Gewichtsteile, insbesondere 30 bis 70 Gewichtsteile und ganz besonders bevorzugt 90 bis 75 Gewichtsteile, bezogen auf die B-Blöcke, betragen.

Gegebenenfalls können in den erfindungsgemäßen statistisch aufgebauten, hydrierten Copolymerisaten auch noch bis zu 40 Gewichtsteile, vorzugsweise bis zu 10 Gewichtsteile mindestens eines ethylenisch ungesättigten Monomeren wie (Meth)acrylsäurealkylester mit 1 - 8 C-Atomen im Alkylrest wie Methacrylat, Ethylacrylat, Butylacrylat, Hydroxyethylacrylat, Methylmethacrylat oder Acylnitril aufgepfropft auf die Blöcke B enthalten sein. Diese Monomeren können entweder allein oder in Mischung miteinander für die Herstellung der hydrierten statistischen Copolymerisate verwendet werden.

Die hydrierten linearen Blockcopolymerisate enthalten die Blöcke A und B im Verhältnis A : B wie 1 : 9 bis 8 : 2, vorzugsweise wie 1 : 6 bis 6 : 2. Die AB-Blöcke sind vorzugsweise 1 bis 4 mal aneinander gekoppelt.

Die erfindungsgemäßen hydrierten Blockpolymerisate weisen vor dem Hydrieren und der Addition der ethylenisch ungesättigten Monomeren auf Basis von Acryl- und Methacrylderivaten folgende schematisch dargestellte Struktur auf:

Struktur I $B-(A-B)_n-A$

Struktur II $B \leftarrow A-B \rightarrow_n A$

wobei in diesem Fall n = 0, 1, 2, 3 oder 4 ist.

A bedeutet hier den nichtelastomeren Block, bestehend aus mindestens einem monoalkenylaromatischen Monomeren und
B den elastomeren Blockanteil, bestehend im wesentlichen aus konjugierten Dienen, wie er oben beschrieben ist.

Der Pfeil in der Struktur II bedeutet, daß zwischen den Blöcken A und B ein kontinuierlicher Übergang von Monomeren des B-Blockes zu Monomeren des A-Blockes herrscht. Dieser kontinuierliche Übergang, gebräuchlich ist auch das englische Wort tapered-Übergang, kann beispielsweise durch Polymerisation einer Mischung der Monomeren, z.B. von Butadien und Styrol erzielt werden. Die Zugabe des zweiten Monomeren nach beendeter Polymerisation des ersten führt zu scharfen Blockübergängen und wird hier durch einen Bruchstrich zwischen den Blöcken in der Struktur I angedeutet.

Als Lösungsmittel für die Polymerisation eignen sich zweckmäßig geradkettige und verzweigte aliphatische Kohlenwasserstoffe wie z.B. n-Pentan, n-Octan, n-Dekan, Isopentan, Isooctan, 2,3-Dimethylbutan, sowie einfache oder substituierte cycloaliphatische und aromatische Kohlenwasserstoffe wie z.B. Cyclopentan, Cyclohexan, Methylcyclohexan, Dekalin, Benzol, Toluol, Ethylbenzol, Cumol, Mesitylen, Tetralin sowie jede beliebige Mischung der aliphatischen, cycloaliphatischen und aromatischen Kohlenwasserstoffe. Vorteilhaft eignet sich als Lösungsmittel Cyclohexan.

Die Momomerenkonzentration im Lösungsmittel liegt vorteilhaft zwischen 20 und 26 %. Es ist zweckmäßig, die Copolymerisation so zu führen, daß die erhaltenen, nicht hydrierten Copolymerisate ein Molekulargewicht haben, das vor dem Koppeln im Bereich zwischen 25.000 und 65.000 liegt. Das Molekulargewicht wird mittels Gelpermeationschromatographie bestimmt und als sogenanntes "Peakmolekulargewicht" angegeben (Eichstandards: eng verteiltes Polystyrol, Temperatur 23°C, Lösungsmittel Tetrahydrofuran). Gelpermeations-Chromatographiekurven wurden gemäß DOS 19 59 922 erhalten, indem man ein Waters Associates Model 100 GPÖ verwendete und eine Säule, die mit Polystyrolgel der besten erhältlichen Qualität gefüllt war. Es wurden Polymerisationslösungen von 0,05 Gew.Vol.-% in Tetrahydrofuran hergestellt. Die Größe der Proben betrug 2 ml der filtrierten Lösung (Krueger HAK 1 pads). Die Flußgeschwindigkeit betrug ungefähr 1 ml/min bei Zimmertemperatur durch eine Viersäulen-Anordnung in Serien in der Porositätsordnung von $10^7$, $10^5$, $10^4$ und $10^3$ Å. Um diesen Molekularbereich zu erhalten, verwendet man zweckmäßig Lithiumalkylkatalysatoren in Mengen von 0,5 bis 8 Mol/100 kg, bezogen auf das Monomerengemisch.

Als Initiatoren für die Polymerisation eignen sich praktisch alle bekannten Organolithiumverbindungen, bevorzugt sind Hydrocarbyllithiumverbindungen, z.B. Phenyllithium, p-Tolyllithium, Methyllithium, Ethyllithium, n-, sek.-, tert.-Butyllithium, Isopropyllithium, vorzugsweise wird n- oder sek.-Butyllithium eingesetzt.

Als sogenannte Randomizer werden z.B. Tetrahydrofuran, Anisol, Tetraethylendiamin, Dimethylglykol oder ähnliche Verbindungen in Mengen von 1 bis 20 Mol pro Mol aktiver Lithiumverbindung eingesetzt.

Nach beendeter anionischer Polymerisation werden die aktiven Lithiumcarbanionen vor dem Hydrieren durch Zugabe von protonenaktiven Substanzen, wie Wasser, Alkohol oder Säuren, abgebrochen. Die so erhaltenen Blockpolymerisate werden nun nach den bekannten Methoden der Pfropfmischpolymerisation, vorzugsweise in Gegenwart von Radikalinitiatoren und bei Temperaturen bei denen die Halbwertszeit des Initiatorzerfalls bei 10 bis 300 Minuten liegt, mit radikalisch polymerisierbaren Monomeren, vorzugsweise Methylacrylat, Ethylacrylat, Butylacrylat, Hydroxyethylacrylat, Methylmethacrylat, Styrol und/oder Acrylnitril gepfropft und anschließend mit geeigneten Katalysatoren, die im wesentlichen nur die ethylenisch ungesättigten Doppelbindungen hydrieren, hydriert.

Das Hydrieren der Butadienphase des Copolymerisates erfolgt nach bekannten Verfahren (vgl. DOS 31 06 959). Dabei ist darauf zu achten, daß überwiegend die vom Butadien herrührenden Doppelbindungen hydriert werden und ein Hydrieren der aromatischen Systeme vermieden wird. Das Hydrieren kann beispielsweise durch Umsetzen der Polymerisate mit Wasserstoff bei Drücken zwischen 5 und 30 bar, insbesondere 10 bis 20 bar und Temperaturen im Bereich von 50 bis 200°C, insbesondere 70 bis 150°C, in Gegenwart von Übergangsmetallkatalysatoren erfolgen. Dabei ist es erforderlich, mindestens 95 %, insbesondere 97 %, der olefinischen Doppelbindungen zu hydrieren. Als Katalysatoren eignen sich z.B. homogene Ni/Al-Katalysatorsysteme, hergestellt aus Ni-II-octoat bzw. -acetylacetonat, Bis-(2,4-pentadienato)nickel) und Al-triethyl bzw. -triisobutyl. Man verwendet zweckmäßig den Katalysator in Mengen von 0,3 Mol/kg bis 7,0 mMol/kg, Ni bezogen auf das Gewicht des zu hydrierenden Polymeren.

Die Aufarbeitung der hydrierten Blockcopolymeren erfolgt in bekannter Weise durch Entfernen des Lösungsmittels mittels Dampfstrippen oder mittels Extruderentgasung. Die Aufarbeitung kann aber auch zusammen mit den anderen Komponenten der erfindungsgemäßen Formmassen erfolgen.

Die Mischungen aus Polyphenylenether und den hydrierten Copolymerisaten, die gegebenenfalls auch Styrolpolymerisate enthalten können, können darüber hinaus auch noch Hilfs- und Zusatzstoffe wie feuerhemmende Mittel aus der Gruppe der aromatischen Phosphate und Phosphinoxide, Verstärkungsmittel wie Glasfasern, organische und mineralische Füllstoffe sowie Stabilisatoren, Verarbeitungshilfsmittel, Farbstoffe und die sonst bisher für die Formmassen bekannt gewordenen Zusatzstoffe sowie weitere mit dem

Matrixpolymerengemisch mischbare Polymere wie SMSA-Copolymerisate, SAN-Copolymerisate, Styrol-(Meth)-acrylsäure-Copolymerisate, Styrol-(Meth)-acrylsäurealkylester-Copolymerisate mit $C_1$-$C_4$-Alkylresten, Polyetherimide, Polyacrylate, Polyamide und alle anderen bisher mit Polyphenylenether als mischbar bekannt gewordenen Polymerisate enthalten.

Die erfindungsgemäßen Formmassen besitzen neben einer hohen Wärmeformbeständigkeit und guten mechanischen Eigenschaften, insbesondere guten Kerbschlagzähigkeiten und Bruchenergien, eine ausgezeichnete Fließfähigkeit und vorzügliche Verarbeitbarkeit auch im Großspritzguß.

Die folgenden Beispiele dienen dazu, die Erfindung zu beschreiben, ohne daß damit eine Begrenzung der Erfindung beabsichtigt ist. Die angegebenen Teile sind Gewichtsteile, es sei denn, es ist anders angegeben.

Beispiele und Vergleichsbeispiele

Komponente a)

Es wurde ein Poly(2,6-dimethyl-1,4-phenylen)ether mit einer Grenzviskosität von 0,60 dl/g (gemessen in Chloroform bei 30°C) und einem Rest-Kupfergehalt von 4 ppm, bezogen auf das Polymerisat eingesetzt. Der Polyphenylenether war gemäß den Beispielen der DE-OS 30 35 599 und der EP 81 708 hergestellt worden.

Komponente b)

Folgende Styrolpolymerisate wurden eingesetzt:

$B_1$) Ein Polystyrol mit einem Molekulargewicht von 200 000 (viskosimetrische Messung in Benzol bei 25°C), hergestellt gemäß S.R. Sandler, W. Karo Polymer Synthesis Org. Chem. Vol. 29/I, Academic Press, New York 1974, Seite 3.

$B_2$) Ein schlagfestes Polystyrol mit einer mittleren Teilchengröße (Gewichtsmittel) von 0,5 µm und einem Polybutadienanteil von 8 Gew.%, hergestellt gemäß DE-OS 30 35 648.

$B_3$) Ein schlagfestes Polystyrol mit einer mittleren Teilchengröße (Gewichtsmittel) von 6,4 µm und einem Polybutadienanteil von 8 Gew.%, hergestellt gemäß DE-OS 30 35 648.

Komponente c)

Folgende hydrierten Blockpolymerisate wurden eingesetzt:

$C_1$) Ein ABA-Blockpolymerisat mit scharf getrennten A-Blöcken, bestehend aus Polystyrol, die 30 Gew.% ausmachen und einem hydrierten Polybutadienblock B, der 70 Gew.% ausmacht. Der Blockkautschuk hatte eine Glastemperatur von -48°C (nach K.H. Illers und H. Breuer, Colloid--Zeitschrift, 176 (1961), Seite 110) und ein Molekulargewicht von 70 000.

$C_2$) Ein hydriertes AB-Blockpolymerisat mit folgendem Aufbau:

A-Block: 15 Gew.% bestehend aus Polystyrol
B-Block: hydriertes statistisches Styrol-Butadien-Copolymerisat, bestehend aus 20 Gew.% Styrol und 80 Gew.% Butadien.

Der Herstellung erfolgte nach folgender Vorschrift: In einem Rührkessel werden 4500 g Cyclohexan, 268 g Styrol und 100 mMol Tetrahydrofuran unter Feuchtigkeitsausschluß und unter Inertgasatmosphäre vorgelegt, mit sec.Butyl-Lithium ausfiltriert und mit 33 mMol sec.Butyl--Lithium 50 min bei 60°C das Styrol praktisch auspolymerisiert. Nach Zugabe von 1020 g Butadien und 255 g Styrol wird erneut 50 min bei 60°C bis zum praktisch vollständigen Umsatz auspolymerisiert und mit 1 ml Isopropanol abgebrochen. Die Viskositätszahl - gemessen in Toluol bei 25°C - liegt bei 71 $cm^3/g$, das Molekulargewicht beträgt 95 000. Die Glastemperatur lag bei -52°C.

$C_3$) Ein hydriertes ABAB-Blockpolymerisat mit folgendem Aufbau:

A-Blöcke: 12 Gew.% Polystyrol
B-Blöcke: hydriertes statistisch aufgebautes Styrol-Butadien-Blockpolymerisat mit 10 Gew.% Styrol und 90 Gew.% Butadien

Die Herstellung erfolgte nach folgender Vorschrift: In einem Rührkessel werden 4500 g Cyclohexan, 300 g Styrol und 198 mMol Tetrahydrofuran unter Feuchtigkeitsausschluß und unter Inertgasatmosphäre vorgelegt, mit sec.Butyl-Lithium ausfiltriert und mit 38 mMol Butyl--Lithium das Styrol in 50 min bei 60°C praktisch auspolymerisiert. Nach Zugabe von 150 g Styrol und 600 g Butadien wird erneut 50 min bei 60°C polymerisiert, erneut 200 g Styrol zugesetzt und auspolymerisiert und in der letzten Stufe die Mischung von 50 g Styrol und 200 g Butadien unter den gleichen Bedingungen polymerisiert und mit 2 ml

Isopropanol die "lebenden" Enden abgebrochen. Die Viskositätszahl - gemessen in Toluol bei 25°C - liegt bei 83 $cm^3/g$, das Molekulargewicht beträgt 85 000. Die Glastemperatur lag bei -58°C.

Zusatzstoffe d)

Folgende Zusatzstoffe wurden verwendet:

$D_1$) Triphenylphosphat

$D_2$) Ethylen-Buten-1-Copolymerisat mit einem Buten-1-Anteil von 8 Gew.% und einer Dichte von 0,919 ($g/cm^3$) und einem Meltindex bei 190°C und 21,6 Kp von 1 (g/10 min).

$D_3$) Styrol-Maleinsäureanhydrid-Copolymerisat mit einem Maleinsäureanhydridanteil von 9 Gew.% und einer Viskositätszahl von 70 (dl/g) (gemessen 0,5 % in Dimethylformamid bei 25°C).

$D_4$) Titandioxid mit einer mittleren Teilchengröße von 0,5 µm.

$D_5$) Trisnonylphenylphosphit

Herstellung der Formmassen:

Die in der Tabelle angegebenen Gewichtsanteile der Komponenten a, b, c und der Zusatzstoffe d wurden miteinander in einem Fluidmischer vermischt und auf einem Zweischneckenextruder bei 280°C aufgeschmolzen, homogenisiert und granuliert.

Prüfung der Formmassen:

Aus den genannten Mischungen wurde mittels einer Spritzgußmaschine bei 280°C Spritztemperatur Prüfkörper hergestellt.

Es wurde die Bruchenergie nach DIN 350 443, Blatt 1 bei 23°C gemessen und die Kerbschlagzähigkeit nach DIN 53 433 bei 23°C.

Die Fließfähigkeit wurde anhand des Schmelzindexes nach DIN 53 735 ermittelt und die Wärmeformbeständigkeit gemäß DIN 53 460/B bestimmt.

Das Verarbeitungsverhalten im Spritzguß wurde auf einer Einschneckenspritzgußmaschine, Fabrikat IDRA, Typ M+B 120S-4200 überprüft (Zuhalte-

kraft 12 000 KN, Einspritzvolumen 3200 $cm^3$ eff.). Es wurde eine Fernseherrückwand mit folgenden technischen Daten als Spritzling verwendet:

Mittleres Gewicht des Spritzlings betrug 1,800 kg

Die Abmessung des Spritzlinges (Länge/Breite/Höhe in mm) betrug 750/490/150.

Der maximale Fließweg FW/mittlere Wanddicke WD in mm ist 411/3.

FW/WD-Verhältnis ist 137 : 1.

Angußart und Abmessungen: Kegel: in mm 7,5/10,5; Länge 90.

Bei der Herstellung wurden folgende Maschinendaten eingehalten:

Temperaturführung im Plastifizierungszylinder (°C) wahlweise für die einzelnen Schüsse:

230/230/240/240/240
230/240/240/250/265
250/250/260/270/280
260/260/260/270/290

Temperatur in der Angußzone betrug 60°C. Die Temperatur im Werkzeug betrug: Gesenkboden 85°C; Gesenkmantel 85°C, Kern 70°C, Auswerferstempel 60°C, der Staudruck in bar war gleich Null (offene Düse)
Einspritzzeit in Sekunden: 3.
Nachdruckzeit in Sekunden: 1,2.
Abkühlzeit in Sekunden: 38
Pausenzeit in Sekunden: 0
Gesamtzykluszeit in Sekunden: 60
Schneckendrehzahl in $Minuten^{-1}$: 36.

Das Verarbeitungsverhalten wurde über den Schmelzfließindex und die Verarbeitungsbreite beurteilt. Die Verarbeitungsbreite ist der Druckbereich, in dem die Formteile keine Beanstandungen aufweisen. Der Bereich wird bei tiefem Spritzdruck durch den optimalen Spritzdruck begrenzt, d.h. die Formteile weisen keine Einfallstellen mehr auf. Die obere Grenze ergibt sich aus dem Spritzdruck, bei dem die Formteile gerade noch entformt werden können. Oberhalb dieser Grenze wird die Form überfüllt. Je größer dieser Bereich ist, umso besser, d.h. mit umso geringeren Schwierigkeiten läßt sich ein Polymerisat verarbeiten. Eine hohe Verarbeitungsbreite ist

erwünscht, um z.B. bei Druckschwankungen oder Schwankungen der Materialeigenschaften, die Ausfallrate an Spritzgußformlingen möglichst niedrig halten zu können. Die Tabelle enthält deshalb die Verarbeitungstemperatur in °C sowie der zu diesen Verarbeitungstemperaturen ermittelte optimale Spritzdruck in bar. Im Anschluß daran folgt eine Spalte, in der die Verarbeitungsbreite den jeweiligen Verarbeitungstemperaturen und dem ermittelten optimalen Spritzdruck zugeordnet ist. Die Tabelle schließt ab mit einer Spalte, in der Bemerkungen, z.B. über eventuelle Schäden (Angußreißer = Risse am Anguß; Schieferbruch = schiefriger Bruch im Angußbereich) an den erhaltenen Spritzgußformteilen erhalten wird.

Die Ergebnisse der Tabelle verdeutlichen, daß die erfindungsgemäßen Formmassen ein wesentlich besseres Verarbeitungsverhalten, insbesondere eine fehlerfreie Verarbeitung in einem breiten Verarbeitungsbereich aufweisen. Vergleiche hierzu insbesondere die Ergebnisse der Versuche 1, 2 und 7 und der Vergleichsversuche A und B.

Tabelle

| Beispiel | Zusammensetzung der Mischung Komponenten a) [Gew.%] | b) [Gew.%] | c) [Gew.%] | d) [Gew.%] | Vicat-tempe-ratur (°C) | Kerbschlag-zähigkeit ($KJ/m^2$) | Bruch-energie (Nm) | Meltindex (21,6 Kp/ 250°C) (g/10') | Spritz-tempe-ratur (°C) | Spritz-druck [bar] | Verarbei-tungs-breite | Bemerkungen |
|---|---|---|---|---|---|---|---|---|---|---|---|---|
| 1 | 45 | $B_2$ (41) | $C_2$ ( 7) | $D_2$ (1) | 136 | 18 | 50 (12) | 54 | 290 | 1070 | 100 | keine |
| | | $B_3$ ( 4) | | $D_5$ (2) | | | | | 300 | 960 | 100 | |
| 2 | 45 | $B_2$ (41) | $C_3$ ( 7) | $D_2$ (1) | 135 | 18 | 53 (9) | 50 | 290 | 1130 | 100 | keine |
| | | $B_3$ ( 4) | | $D_5$ (2) | | | | | 300 | 1000 | 100 | |
| 3 | 60 | $B_1$ (22) | $C_2$ (15) | $D_2$ (1) | 155 | 17 | 50 (4) | 13 | 310 | 1150 | 90 | keine |
| | | | | $D_5$ (2) | | | | | 300 | 1060 | 80 | |
| 4 | 40 | $B_2$ (32) | $C_2$ (17) | $D_2$ (1) | 130 | 22 | 38 (3) | 60 | 290 | 1050 | 110 | keine |
| | | $B_3$ ( 3) | | $D_3$ (5) | | | | | 300 | 930 | 100 | |
| | | | | $D_5$ (2) | | | | | | | | |
| 5 | 40 | $B_2$ (32) | $C_2$ (15) | $D_2$ (1) | 128 | 23 | 49 (15) | 71 | 280 | 1180 | 120 | keine |
| | | $B_3$ ( 3) | | $D_4$ (7) | | | | | 290 | 1020 | 110 | |
| | | | | $D_5$ (2) | | | | | | | | |
| 6 | 50 | $B_2$ (27) | $C_2$ (10) | $D_1$ (7) | 122 | 21 | 40 (2) | 97 | 270 | 1280 | 120 | keine |
| | | $B_3$ ( 3) | | $D_2$ (1) | | | | | 280 | 1050 | 110 | |
| | | | | $D_5$ (2) | | | | | | | | |
| 7 | 60 | - | $C_2$ (25) | $D_1$ (7) | 136 | 26 | 43 (11) | 65 | 290 | 980 | 110 | keine |
| | | | | $D_2$ (1) | | | | | 300 | 850 | 110 | |
| | | | | $D_4$ (5) | | | | | | | | |
| | | | | $D_5$ (2) | | | | | | | | |

Tabelle Forts.

| Beispiel | Zusammensetzung der Mischung Komponenten a) [Gew.%] | b) [Gew.%] | c) [Gew.%] | d) [Gew.%] | Vicat-temperatur (°C) | Kerbschlagzähigkeit ($KJ/m^2$) | Bruchenergie (Nm) | Meltindex (21,6 Kp/ 250°C) (g/10') | Spritztemperatur (°C) | Spritzdruck [bar] | Verarbeitungsbreite | Bemerkungen |
|---|---|---|---|---|---|---|---|---|---|---|---|---|
| Vergleichsbeispiele (nicht erfindungsgemäß) | | | | | | | | | | | | |
| A | 45 | $B_2$ (41) | $C_1$ ( 7) | $D_2$ (1) | 132 | 15 | 30 (35) | 25 | 290 | 1280 | 40 | Angußreißer |
| | | $B_3$ ( 4) | | $D_5$ (2) | | | | | 300 | 1140 | 40 | Schieferbruch |
| B | 60 | - | $C_1$ (25) | $D_1$ (7) | 130 | 24 | 30 (33) | 21 | 290 | 1230 | 15 | |
| | | | | $D_2$ (1) | | | | | 300 | 1070 | 15 | Schieferbruch |
| | | | | $D_4$ (3) | | | | | | | | |
| | | | | $D_5$ (2) | | | | | | | | |

Patentansprüche

1. Thermoplastische Formmassen auf der Grundlage von Polyphenylenethern oder Gemischen aus Polyphenylenethern und Styrolpolymerisaten, dadurch gekennzeichnet, daß sie außerdem ein hydriertes lineares Blockpolymerisat der allgemeinen Formel

$$(AB)_n$$

enthalten, worin die Blöcke A aufgebaut sind aus mindestens einem monoalkenyl-aromatischen Kohlenwasserstoff und die Blöcke B statistisch aufgebaute hydrierte Copolymerisate darstellen aus 5 bis 30 Gewichtsteilen mindestens eines mono-alkenyl-aromatischen Kohlenwasserstoffs, 95 bis 70 Gewichtsteilen mindestens eines copolymerisierbaren konjugierten Diens und auf den Block B aufgepfropft 0 bis 40 Gewichtsteilen mindestens eines ethylenisch ungesättigen Monomeren, ausgewählt aus der Gruppe der (Meth)acrylsäurealkylester mit 1 bis 8 C-Atomen im Alkylrest, Styrol und Acrylnitril, wobei die Gewichtsteile sich zu 100 Gewichtsteilen ergänzen, und n = 1 oder eine ganze Zahl von 2 bis 5 ist und die Blöcke A und B im Verhältnis 1 : 9 bis 8 : 2 stehen.

2. Thermoplastische Formmassen gemäß Anspruch 1, dadurch gekennzeichnet, daß der Polyphenylenether ein in ortho-Position disubstituiertes Polyphenylenoxid ist, von dem der Ethersauerstoff einer Einheit mit dem Benzolkern der benachbarten Einheit verbunden ist und wobei mindestens 50 Einheiten verbunden sind.

3. Thermoplastische Formmasse gemäß Anspruch 1, dadurch gekennzeichnet, daß als Styrolpolymerisate Styrolhomopolymerisate oder schlagzäh modifizierte Styrolpolymerisate verwendet werden.

4. Thermoplastische Formmasse gemäß Anspruch 1, dadurch gekennzeichnet, daß das schlagfeste Styrolpolymerisat 20 bis 60 Gew.% Weichkomponente enthält und das 98 bis 50 Gew.% dieser Weichkomponente eine mittlere Teilchengröße im Bereich 0,2 bis 1 µm und 2 bis 50 Gew.% eine mittlere Teilchengröße von größer als 3 µm aufweist.

5. Thermoplastische Formmasse gemäß Anspruch 1, dadurch gekennzeichnet, daß sie ein Blockpolymerisat der allgemeinen Formel enthalten, mit A-Blöcken aufgebaut sind aus Styrol, α-Methylstyrol, o- und/oder p-Methylstyrol, o- und/oder p-tert.-Butylstyrol und die B-Blöcke statistisch aufgebaute hydrierte Copolymerisate darstellen, aus 5 bis 30 Gewichtsteilen Styrol, α-Methylstyrol, o- und/oder p-Methylstyrol, o- und/oder p-tert.-Butylstyrol und 95 bis 70 Gewichtsteilen Butadien, Isopren und/oder Pentadien, wobei die Gewichtsteile sich auf 100 ergänzen und die A-Blöcke 10 bis 70 Gew.% und die B-Blöcke 90 bis 30 Gew.% des Blockpolymerisates ausmachen.

6. Thermoplastische Formmassen gemäß Anspruch 1, dadurch gekennzeichnet, daß mindestens 95 % aller ursprünglich vorhandenen monoolefinisch ungesättigten Doppelbindung im Blockpolymerisat hydriert sind.

7. Thermoplastische Formmassen gemäß Anspruch 1, dadurch gekennzeichnet, daß im Blockpolymerisat praktisch alle monoolefinisch ungesättigten Doppelbindungen und praktisch keine der von den vinylaromatischen Monomeren herrührenden Doppelbindungen hydriert sind.

8. Thermoplastische Formmassen gemäß Anspruch 1, dadurch gekennzeichnet, daß auf die B-Blöcke 0 bis 40 Gewichtsteile mindestens eines ethylenisch ungesättigten Monomeren ausgewählt aus der Gruppe von (Meth)-acrylsäurealkylester mit 1 bis 4 C-Atomen im Alkylrest, Acrylnitril und/oder Styrol aufgepfropft sind.

9. Thermoplastische Formmasse gemäß Anspruch 1, dadurch gekennzeichnet, daß das Blockpolymerisat ein lineares AB-Blockpolymerisat ist mit einem Anteil von 15 bis 60 Gew.% der A-Blöcke, die aus Styrol und/oder p-Methylstyrol und 85 bis 40 Gew.% an hydrierten B-Blöcken bestehen, in denen die Comonomeren in statistischer Verteilung eingebaut sind und als Monomerenbausteine 10 bis 30 Gew.% Styrol und/oder p-Methylstyrol und 90 bis 70 Gew.% Butadien und/oder Isopren enthalten.

10. Thermoplastische Formmassen gemäß Anspruch 1, dadurch gekennzeichnet, daß das Blockpolymerisat ein ABAB-Blockpolymerisat ist, in dem die Summe der A-Blöcke 15 bis 60 % des gesamten Blockpolymerisates beträgt und die A-Blöcke aufgebaut sind aus Styrol und/oder p-Methylstyrol und die Summe der B-Blöcke 85 bis 40 Gew.% beträgt und die B-Blöcke hydrierte Copolymerisate mit statistischer Verteilung sind, in denen als monomere Bausteine 10 bis 30 Gew.% Styrol und/oder p-Methylstyrol und 90 bis 70 Gew.% Butadien und/oder Isopren enthalten sind.

11. Thermoplastische Formmassen gemäß Anspruch 1, dadurch gekennzeichnet, daß zusätzlich weitere mit dem Matrixpolymeren verträgliche Polymere enthalten sind.

12. Thermoplastische Formmasse gemäß Anspruch 1, dadurch gekennzeichnet, daß als weitere mit dem Matrixpolymeren mischbaren Polymere Styrol-Maleinsäureanhydrid-Copolymere, Styrol-Acrylnitril-Copolymere, Styrol-Alkyl(meth)acrylat-Copolymere mit $C_1$-$C_4$-Alkylresten, Styrol-(Meth)acrylsäure-Copolymerisate, Polyetherimidpolymerisate, Polyamide oder Polyacrylate enthalten sind.

13. Thermoplastische Formmassen gemäß Ansprüchen 1 bis 6, dadurch gekennzeichnet, daß zusätzlich feuerhemmende Mittel ausgewählt aus der Gruppe der aromatischen Phosphate und Phosphinoxide enthalten sind.

14. Thermoplastische Formmassen gemäß Ansprüchen 1 bis 6, dadurch gekennzeichnet, daß zusätzlich eine verstärkend wirkende Menge eines Glasfaserverstärkungsfüllstoffes enthalten ist.

15. Thermoplastische Formmassen gemäß Ansprüchen 1 bis 6, dadurch gekennzeichnet, daß zusätzlich mineralische Füllstoffe enthalten sind.